# EUROPEAN PATENT SPECIFICATION

(11) **EP 4 122 103 B1**
(45) Date of publication and mention of the grant of the patent: **03.12.2025**
(21) Application number: 20733243.8
(22) Date of filing: 12.06.2020
(51) Int. Cl.: H04B 1/16, H04B 1/18

(54) **RECEIVER UNIT, DEVICE WITH RECEIVER UNIT, AND METHOD FOR SUPPRESSING INTERFERENCE**
EMPFANGSEINHEIT, VORRICHTUNG MIT EMPFANGSEINHEIT UND VERFAHREN ZUR STÖRUNTERDRÜCKUNG
UNITÉ RÉCEPTRICE, DISPOSITIF DOTÉ D'UNE UNITÉ RÉCEPTRICE ET PROCÉDÉ DE SUPPRESSION D'INTERFÉRENCE

(43) Date of publication of application: 25.01.2023
(73) Proprietor: Huawei Technologies Co., Ltd., Shenzhen, Guangdong 518129, (CN)
(72) Inventor: EZRI, Doron, 80992 Munich (DE); WEITZMAN, Avi, 80992 Munich (DE); JIANG, Xingfeng, 80992 Munich (DE); NI, Yizhan, 80992 Munich (DE); ZHANG, Li, 80992 Munich (DE); KLEIN, Shaul, 80992 Munich (DE)
(74) Representative: Isarpatent
(86) International application number: PCT/EP2020/066268
(87) International publication number: WO 2021/249652

(56) References cited:
- US-A1- 2011 288 823
- US-A1- 2014 038 531
- US-B2- 10 623 337

## Description

### TECHNICAL FIELD

The present disclosure relates generally to the field of wireless communication; and the invention more specifically, relates to a receiver unit for use in a wireless network, a method for suppressing band interference (e.g. an in-band interference) in the receiver unit in an incoming signal in the wireless network, and a computer program product.

### BACKGROUND

Wireless Local Area Networks (WLANs) based on IEEE 802.11 and variations thereof, are widely used to connect one or more user devices to a wireless network using a WLAN device (e.g. an Access Point device). In an example, IEEE 802.11 (e.g. Wi-Fi) operates on a number of unlicensed frequency bands, such as 2.4 GHz, 3.8 GHz, 5 GHz, or 60 GHz. In certain scenarios, in order to increase system capabilities (i.e. network capacity), multiple WLAN devices may share the same space (e.g. approximately equal to the space shared by a single WLAN device or an access point device), which is also referred to as overlapping Wi-Fi access points, in an example. For example, in a case of Very High Deployment (VHD) in WLANs, many WLAN devices share the same space to accommodate a wide number of user devices. In such a case, the distance between adjacent WLAN devices decreases substantially, for example, up to 10 metres which can induce a band interference power of -35 dBm at 5 GHz in a conventional receiver (also referred to as conventional receiver unit) of a given WLAN device evice. In addition to this, in WLANs, a user device tethered to a conventional WLAN device (e.g. within a proximal range, such as about 2 metres) can induce an in-band interference power of -30dBm at 5GHz. The nearby deployed WLAN devices and the tethered user device act as high-power interferers to the conventional WLAN devices. Moreover, the presence of cellular signals (e.g. 2G. 3G, 4G, 5G, and the like) and other Wi-Fi networks further increases the signal interference, which in turn compels the conventional receiver (e.g. specifically, the automatic gain control function of the conventional receiver) to attenuate a front end power amplifier (e.g. a low noise amplifier) of the conventional receiver to protect from the signal degradation (e.g. signal degradation caused from known nonlinearity effects of high in-band input power). However, such attenuation as an unwanted consequence, significantly deteriorates the thermal noise performance, and thus the sensitivity of the conventional receiver (i.e. conventional receiver unit).

Currently, certain attempts have been made to mitigate the effect of the high-power interferers on the performance of the WLAN device, for example, by use of a bypass stage. In a conventional receiver, the bypass stage is activated or used at high power-input levels, for example, to bypass the input LNA. The attenuation (or bypass) of the LNA results into degradation of noise figure (NF) and hence, sensitivity of the receiver of the WLAN device gets reduced. Moreover, signal-to-noise ratio (SNR) of the conventional receiver of the WLAN device also gets degraded after attenuation (or bypass) of the input LNA. In another example, a conventional Interference Aware Self-Optimizing (IASO) technique-based receiver (hereinafter, referred to as IASO receiver) is known to mitigate the interference of adjacent channel on WLAN / user devices to a certain extent. The IASO receiver has additional sensors to determine whether the interference present in the received signal is mainly out-of-band or in-band. However, the inclusion of additional stages in the IASO receiver increases cost and power consumption of the conventional WLAN device. Furthermore, it is important to notice that the RF path is not coping with high interferers, but the whole chain may be better optimized, but degradation due to high interference will still be significantly noticeable. Moreover, at the very high band interference levels (e.g. in the case of very high deployment scenarios), the sensitivity and performance (throughput) of a conventional receiver is degraded almost constantly. Thus, there exists a technical problem of an inefficient receiver used in a conventional WLAN device that manifests reduced sensitivity and performance (throughput) and fails to adequately suppress the effect of in-band interference in the wireless network (e.g. in very high deployment scenarios).

US 10 623 337 B2 discloses a receiver unit comprising an antenna followed by a switching network including switches followed by a filter bank including a plurality of filters. Each filter output is connected to a respective low noise amplifier. A controller controls switches of the switching network to intelligently select desired or targeted paths through the switching network for further filtering with an associated filter and possibly amplification with an associated amplifier.

US 2011/288823 A1 discloses a receiver unit in which a RF signal is filtered by a bandpass filter with tunable notch filters controlled by a tuning control which is controlled by a RF spectrum monitor which analyses the filter RF signal.

US 2014/038531 A1 discloses a high-frequency front-end circuit which includes tunable bandpass filters for filtering an antenna signal.

However, in light of the foregoing discussion, there exists a need to overcome the aforementioned drawbacks associated with the conventional methods and devices (i.e. conventional receivers and WLAN devices) used to suppress in-band interference in a wireless network.

### SUMMARY

The object of the present invention is to provide a receiver unit, a method for suppressing in-band interference in the receiver unit in an incoming signal in a wireless network, and computer program product to provide a solution to the existing problem of an inefficient receiver used in a conventional WLAN device that manifests reduced sensitivity and performance (throughput) and fails to adequately suppress the effect of in-band interference in a wireless network (e.g. in high deployment or very high deployment scenarios). This solution is to overcome at least partially the problems encountered in prior art, and provides an improved receiver unit, a method that provides almost interference-free communication or at least significantly reduced in-band interference even in highly densed wireless network scenarios (e.g. in high deployment or very high deployment scenarios).

The object of the present disclosure is achieved by the solutions provided in the enclosed independent claims. Advantageous implementations of the present disclosure are further defined in the dependent claims.

In a first aspect, the present disclosure provides a receiver unit for use in a wireless network, comprising a front-end module arranged to receive an incoming signal from an antenna and comprising a first and a second switch, the first switch being a transmitter/ receiver, T/R, switch, the incoming signal comprising a first frequency range corresponding to a desired channel and at least a second frequency range comprising an undesired signal, a control unit arranged between the antenna and the front-end module, comprising an adaptable filter unit connected at its input to a receive pin of the T/R switch of the frontend-module and connected at its output to the second switch of the front-end module, and the adaptable filter unit comprising a plurality of filters of different types arranged to selectively attenuate the at least second frequency range, while letting the first frequency range through to the front-end module, a processing circuit including a low-noise amplifier receiving an output from the second switch of the front-end module, the control unit arranged to control the adaptable filter unit to control the frequencies included in the first and/or the second frequency range, further comprising a monitoring unit arranged to monitor the incoming signal to identify an interfering signal component, wherein the control unit is arranged to control the properties of the adjustable filter unit based on the presence of an interfering signal component in the incoming signal by selectively connecting and disconnecting filters of the plurality of filters.

The receiver unit provides an enhanced performance even when used in a highly densed wireless network (e.g. in high deployment or very high deployment scenarios). Typically, in highly densed wireless network, multiple WLAN devices and multiple user devices operate concurrently. The disclosed receiver unit can filter out undesired signals that may be generated from WLAN devices or user devices. As a result of filteration of the undesired signals, sensitivity of the receiver unit increases, which further enhances the peformance (i.e. throughput) of the receiver unit or a WLAN device in which the receiver unit is potentially used. As a result of the arrangement of the adaptable filter unit between the antenna and the front-end module, the receiver unit becomes capable to process a weak received signal even in the presence of noise.

In a possible implementation form, the receiver unit further comprises a monitoring unit arranged to monitor the incoming signal to identify an interfering signal component and the control unit is arranged to control the properties of the adjustable filter unit based on the presence of the interfering signal component in the incoming signal.

The identification of the interfering signal component facilitates the filtering process, that is filteration of the undesired signals. The properties of the adjustable filter unit are adjustable, thus both known and unknown interfering signals (i.e. different interfering signal components) can be filtered out, while desired signals of the first frequency range are allowed to pass through.

In a possible implementation form, the at least one filter is an adjustable filter, and the control unit is arranged to control the adaptable filter unit by adjusting the adjustable filter.

The adjustable filter can be tuned to a wide frequency range (i.e. the frequency range which is configured either to filter out interfering and undesired signals or to pass through desired signals) instead of a single frequency. The adjustable filter does not use a cascade of individual filters, which are required to operate on a specific frequency. Therefore, the use of the adjustable filter ensures simplicity in design of the receiver unit, and hence provides a cost-effective receiver unit having reduced power consumption as compared to a conventional receiver.

In a possible implementation form, the at least one filter comprises at least one bandpass filter, highpass filter, lowpass filter or band-stop filter, arranged to let the first frequency range through to the front-end module.

The tuning of the at least one filter to bandpass filter, highpass filter, lowpass filter or band-stop filter enhances the performance of the receiver unit with respect to the desired signals (i.e. the signals which are allowed to pass through the filter).

In a possible implementation form, the at least one filter comprises at least one bandpass filter, highpass filter, lowpass filter or band-stop filter, arranged to filter out the second frequency range.

The tuning of the at least one filter to bandpass filter, highpass filter, lowpass filter or band-stop filter further enables to filter out the undesired signals or interference signals. The filteration of the interference signals brings down the requirement on linearity of the receiver unit as compared to a conventional receiver, thereby reducing power consumption and cost of the receiver unit.

In a possible implementation form, the filter unit comprises a plurality of filters.

The plurality of filters enables to accurately and selectively attenuate the undesired signals while keeping the desired signals intact.

In a possible implementation form, the control unit is arranged to adapt the frequency range by selectively connecting one or more of the filters between the antenna and the front-end module.

The use of one or more of the filters enables minimization of interference signals' effect while simultaneously, increasing performance of the receiver unit.

In a possible implementation form, the receiver unit is configured for use in a Wi-Fi network.

The receiver unit can reject the in-band interference signals and hence, can be used in a Wi-Fi network with one or more user devices, even in high deployment and very high deployment scenarios.

In a second aspect, the present disclosure provides a wireless local area network (WLAN) device for use in a wireless network, comprising the receiver unit according to the first aspect and its various implementation forms.

The WLAN device of the second aspect achieves all the advantages and effects of the receiver unit of the first aspect.

In a third aspect, the present disclosure provides a wireless network comprising at least one WLAN device according to the second aspect.

The wireless network that includes one or more WLAN devices has interference rejection capability and hence, the performance of one WLAN device is not affected by the presence of adjacent WLAN devices or other interferers present in the wireless network. Additionally, the wireless network that involves use of the WLAN device of the second aspect achieves all the advantages and effects of the receiver unit of the first aspect.

In a fourth aspect, the present disclosure provides a method of suppressing in-band interference in a receiver unit of the first aspect in an incoming signal in a wireless network. The method comprises the step of controlling the properties of an adjustable filter unit connected on an input terminal of the receiver to let through a first frequency range corresponding to a desired channel, and to selectively attenuate at least one frequency range considered to be an interfering signal. wherein the adjustable filter unit comprises a plurality of filters of different types and the step of controlling the properties of the adjustable filter unit includes selectively connecting and disconnecting filters of the plurality of filters on the input.

The method of the fourth aspect enables to suppress in-band interference at the receiver which results in a lower linearity requirement in the receiver design. The method significantly mitigates adjacent channel (or in-band) interference. Moreover, the method of the fourth aspect achieves all the advantages and effects of the receiver unit of the first aspect.

The method comprises monitoring the incoming signal and controlling the properties of the adjustable filter unit based on the presence of an interfering signal in the incoming signal.

The monitoring of the incoming signal enables identification of an interfering signal and accordingly the properties of the adjustable filter unit are controlled to filter out the interfering signal. The filteration of the interfering signal increases sensitivity of the receiver unit.

In a possible implementation form, the adjustable filter unit comprises at least one tunable filter and the step of controlling the properties of the filter unit includes tuning the filter.

The performance of the adjustable filter unit depends on tuning the filter to allow the reception of desired signal while attenuating the interfering signal.

In a possible implementation form, the adjustable filter unit comprises a plurality of filters and the step of controlling the properties of the filter unit includes selectively connecting and disconnecting filters of the plurality of filters on the input.

The selective connecting and disconnecting filters of the plurality of filters on the input increases the flexibity. In a case where no filteration of the incoming signal is required, the filters of the adjustable filter unit can be disconnected. This implies that the filters of the adjustable filter unit are selected on need basis.

In a possible implementation form, the method further comprises the step of compensating an insertion loss caused by the filter unit.

The insertion loss caused by the filter unit is optionally compensated to maintain or improve the signal to noise ratio (SNR) of the incoming signal at the receiver unit.

In a fifth aspect, the present disclosure provides a computer program product comprising computer readable instructions which, when performed in a receiver unit for a wireless network, will cause the receiver unit to perform the method according to the second aspect.

The computer program product of the fifth aspect achieves all the advantages and effects of the receiver unit of the first aspect.

In a sixth aspect, the present disclosure provides an access point device for use in a wireless network, comprising the receiver unit according to the first aspect and its various implementation forms.

The access point device of the sixth aspect achieves all the advantages and effects of the receiver unit of the first aspect.

It has to be noted that all devices, elements, circuitry, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof. It will be appreciated that features of the present disclosure are susceptible to being combined in various combinations without departing from the scope of the present disclosure as defined by the appended claims.

Additional aspects, advantages, features and objects of the present disclosure would be made apparent from the drawings and the detailed description of the illustrative implementations construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
- FIG. 1A: is a block diagram that illustrates various exemplary components of a receiver unit, in accordance with an embodiment of the present disclosure;
- FIG. 1B: is a network environment diagram of a system with an wireless local area network (WLAN) device and a user device, in accordance with an embodiment of the present disclosure;
- FIG. 2A: is a circuit diagram of a receiver unit with an adaptable filter unit, in accordance with an embodiment of the present disclosure;
- FIG. 2B: is a circuit diagram of a receiver unit with an adaptable filter unit, in accordance with another embodiment of the present disclosure;
- FIG. 3: is an illustration of an exemplary implementation of a wireless network with WLAN devices, receiver units, and user devices, in a very high deployment scenario, in accordance with an embodiment of the present disclosure; and
- FIG. 4: is a flowchart of a method of suppressing in-band interference in a receiver in an incoming signal in a wireless network, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

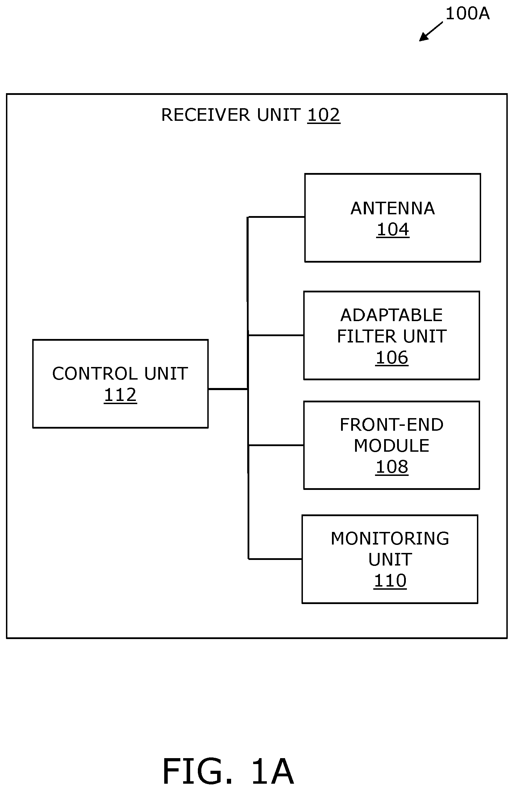

FIG. 1A is a block diagram that illustrates various exemplary components of a receiver unit, in accordance with an embodiment of the present disclosure. With reference to FIG. 1A, there is shown a block diagram **100A** of the receiver unit **102.** The receiver unit **102** includes an antenna **104,** an adaptable filter unit **106,** a front-end module (FEM) **108,** and a control unit **112.** In an implementation, the receiver unit **102** may further include a monitoring unit **110.** In an example, the control unit **112** may be communicatively coupled to the antenna **104,** the adaptable filter unit **106,** the front-end module (FEM) **108,** and the monitoring unit **110.**

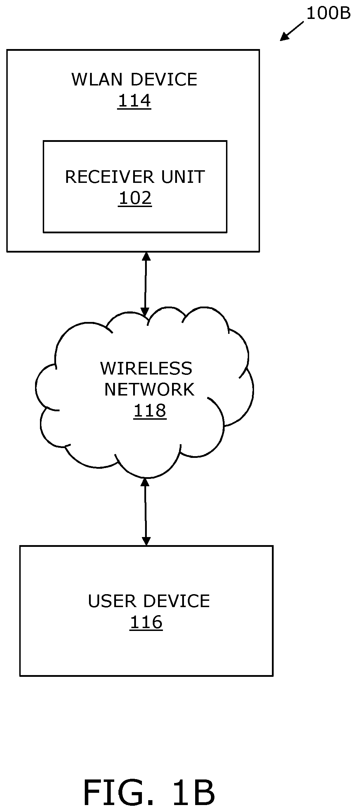

The receiver unit **102** is configured to receive an incoming signal via the antenna **104.** The receiver unit **102** may also be referred to as a receiver or a receiving device that is used in a wireless network (e.g. wireless local area networks (WLANs)-based on IEEE **802.11** or variations thereof). In an example, the receiver unit **102** may be provided in a WLAN device (described in detail, for example, in FIG. 1B). Alternatively, the receiver unit **102** may be a part of (or used in) other wireless communication device, for example, a WLAN- IEEE **802.11** capable device (or variations thereof), a noise or interference cancelling device, an echo cancelling device, or other portable or non-portable communication devices used for suppressing in-band interference.

The antenna **104** is configured to receive an incoming signal from a user device (described in detail, for example, in FIG. 1B). Examples of the antenna **104** may include, but is not limited to, a radio frequency transceiver, a network interface, a telematics unit, or any other antenna suitable for use in the receiver unit **102,** a WLAN-enabed device, such as an access point device, a smart phone, an Internet-of-Things (IoT) device, or other portable or non-portable communication devices. The antenna **104** supports various wireless communication protocols to execute wireless communication.

The adaptable filter unit **106** comprises at least one filter arranged to selectively attenuate a frequency range, while letting another frequency range of the incoming signal. The adaptable filter unit **106** is capable of self-adjusting its filter coefficients according to characteristics of an input signal. The input signal may be an unknown or time-varying signal with a noisy environment (e.g. high deployment or very high deployment scenarios). In an implementation scenario of adjacent channel interference, an interference signal may be much stronger than a desired signal. In the implementation scenario, a filter unit with fixed-filter coefficients is unable to remove the in-band interference signal, however, the adaptable filter unit **106** successfully removes the in-band interference signal. In such implementation scenarios, the adaptable filter unit **106** ensures improved mitigation of the in-band interference signal. The adaptable filter unit **106** may also be referred to as an adaptable filter circuit. Examples of implementation of the adaptable filter unit **106** may include, but is not limited to, a digital filter integrated circuit, an analog filter integrated circuit, a mixed filter integrated circuit, an application-specific integrated circuit (ASIC), a system on chip (SoC), and other circuits. Moreover, the adaptable filter unit **106** may refer to one or more individual integrated circuits or an electronic circuit that is part of the receiver unit **102.**

The front-end module (FEM) **108** is configured to receive the incoming signal from the antenna **104.** The FEM **108** is an interface between the antenna **104** and the monitoring unit **110.** Examples of implementation of the FEM **108** may include, but is not limited to, an integrated circuit, an application-specific integrated circuit (ASIC), an electronic circuitry comprising a number of electronic components, and other circuits.

The monitoring unit **110** is configured to (or arranged to) monitor the incoming signal to identify an interfering signal component. The monitoring unit **110** may also be referred to as a monitoring circuit. Examples of implementation of the monitoring unit **110** may include, but is not limited to, an integrated circuit, an application-specific integrated circuit (ASIC), or a specialized circuitry configured to monitor the incoming signal to identify the interfering signal component.

The control unit **112** is configured to control the adaptable filter unit **106** by controlling the frequencies included in the incoming signal. The control unit **112** may also be referred to a control circuit. Examples of the control unit **112** may include, but is not limited to, an integrated circuit, a co-processor, a microprocessor, a microcontroller, a complex instruction set computing (CISC) processor, an application-specific integrated circuit (ASIC) processor, a reduced instruction set (RISC) processor, a very long instruction word (VLIW) processor, a central processing unit (CPU), a state machine, a data processing unit, and other processors or circuits. Moreover, the control unit **112** may refer to one or more individual processors, processing devices, a processing unit that is part of the receiver unit **102.** In an implementation, the monitoring unit **110** and the control unit **112** may be implemented as a single circuitry.

In operation, the receiver unit **102** for use in a wireless network, comprises the front-end module **108** arranged to receive an incoming signal from the antenna **104,** the incoming signal comprising a first frequency range that corresponds to a desired channel and at least a second frequency range comprising an undesired signal. In an example, the wireless network may be a WLAN-based network. In the wireless network, the receiver unit **102** is used to connect a number of user devices wirelessly. The incoming signal refers to a signal originated from external communication devices, such as the user devices (e.g. a smart phone, a laptop computer, an Internet-of-Things (IoT) device, etc). In an implementation, the incoming signal may be a combination of signals originated from all the user devices connected to the wireless network. In another implementation, the incoming signal may be a unique signal orginated from each user device connected to the wireless network.

The incoming signal includes the desired channel and the undesired signal (i.e. an interfering signal component) within the operating band. In an example, a user device, such as a laptop computer may be connected to the receiver unit **102** in the wireless network. Another user device, such as a smart phone, may be tethered to the receiver unit **102** (e.g. within a proximal range, such as about 2 metres). In such an example, the incoming signal received by the antenna **104** is a combination of the signals originated from the laptop computer and the smart phone. The signal from the laptop computer comprises (i.e. lies within) the first frequency range that corresponds to the desired channel. The signal from the laptop computer can also be referred as a desired signal of the incoming signal. The signal from the smart phone lies within the second frequency range comprising the undesired signal. The signal from the smart phone can also be referred as an interference signal of the incoming signal.

The device (i.e the receiver unit 102) further comprises the adaptable filter unit **106** arranged between the antenna **104** and the front-end module 108. The reason for the arrangement of the adaptable filter unit **106** between the antenna **104** and the front-end module **108** is that the interference signal of the incoming signal must be filtered at first by the adaptable filter unit **106** before the incoming signal reaches to the front-end module **108.**

The adaptable filter unit **106** comprises at least one filter (i.e. one or more filters) arranged to selectively attenuate the at least second frequency range, while letting the first frequency range through to the front-end module **108.** The adaptable filter unit **106** performs a frequency selection of the incoming signal by use of the at least one filter. The frequency selection is a process of passing (or amplifying) a desired range of frequency while attenuating (or suppressing) an undesired range of frequency. The first frequency range corresponds to the desired range of frequency which is passed to the front-end module **108.** The at least second frequency range corresponds to the undesired range of frequency that is attenuated by the at least one filter included in the adaptable filter unit **106.**

The adaptable filter unit **106** provides a dynamic filtering capability that enables a WLAN device to use any desired channel in the working frequency band and still be able to suppress the neighbouring channel interference. The adjustable filter unit **106** comprises a plurality of filters, where the properties of the adjustable filter unit **106** is controlled to selectively connect and disconnect one or more filters of the plurality of filters on the input to enable to use any desired channel in the working frequency band and still be able to suppress the neighbouring channel interference, thus providing the dynamic filtering capability in real-time or near real time in the presence of interferers (e.g. in-band interference) and even in high deployment or very high deployment scenarios.

The receiver unit **102** further comprises the control unit **112** arranged to control the adaptable filter unit **106** to control the frequencies included in the first and/or the second frequency range. The control unit **112** is used to control (or tune) the filter coefficents of the at least one filter based on the frequency range of the incoming signal. The at least one filter further assists the adaptable filter unit **106** to adjust its filter coefficents according to the first and/or the second frequency range of the incoming signal.

In accordance with an embodiment, the at least one filter is an adjustable filter, and the control unit **112** is arranged to control the adaptable filter unit **106** by adjusting the adjustable filter. In an example, the performance of the adaptable filter unit **106** potentially depends on properties of the at least one filter. The at least one filter is an adjustable filter which has the ability to adjust its filter coefficients. The control unit **112** is used to control (or tune) the filter coefficients of the adjustable filter on the basis of frequency range of the incoming signal.

In accordance with an embodiment, the at least one filter comprises at least one bandpass filter, highpass filter, lowpass filter or band-stop filter, arranged to let the first frequency range through to the front-end module 108. Depending on the first frequency range of the incoming signal that is passed through the adaptable filter unit **106** to the front-end module **108,** the at least one filter (i.e. the adjustable filter) is adjusted by use of the control unit **112.** The adjustable filter is tunable (i.e. controlled) to perform like the bandpass filter, the highpass filter, the lowpass filter, or the band-stop filter. In an example, the band pass filter is used to pass a specific band of frequency and attenuate other frequencies outside the specific band. The low pass filter refers to a filter which allows all the frequencies to pass that are below a certain cut off frequency. The frequencies above the cut off frequency are attenuated. The high pass filter is used to attenuate all the frequencies below a cut off frequency and passes other frequencies above the cut off frequency. And lastly, the band stop filter is used to attenuate (or stop) a specific band of frequency and allows to pass other frequencies outside the specific band.

In accordance with an embodiment, the at least one filter comprises at least one bandpass filter, highpass filter, lowpass filter or band-stop filter, arranged to filter out the second frequency range. In oder to attenuate (or filter out) the second frequency range of the incoming signal by use of the adaptable filter unit **106,** the adjustable filter is tuned to perform like a bandpass filter, highpass filter, lowpass filter, or band-stop filter. Based on a frequency of an interfering signal component in the second frequency range, one or more of the bandpass filter, the highpass filter, the lowpass filter, or the band-stop filter, may be activated (or employed for filtering out the second frequency range).

In accordance with an embodiment, the adaptable filter unit **106** comprises a plurality of filters. In some embodiments, the adaptable filter unit **106** includes one filter, whereas in some other embodiments, the adaptable filter unit **106** includes multiple filters. The plurality of filters includes a combination of one or more bandpass filter, highpass filter, lowpass filter, and band-stop filter.

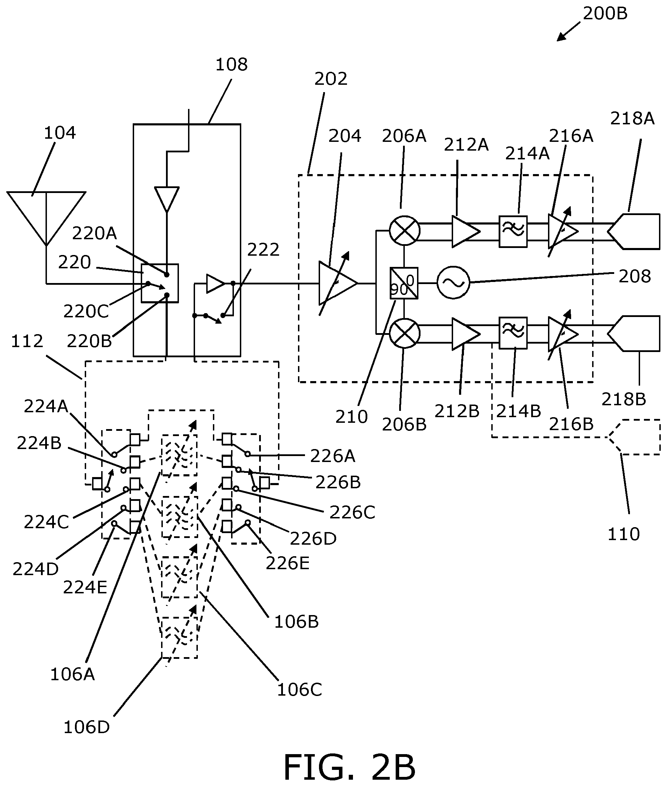

In accordance with an embodiment, the control unit **112** is arranged to adapt the frequency range by selectively connecting one or more of the filters between the antenna **104** and the front-end module **108.** The control unit **112** selects either an individual filter or a group of two or more filters of the plurality of filters in the adaptable filter unit **106** on the basis of the frequency range of the incoming signal. The adaptable filter unit **106** includes a switch circuit to dynamically enable or disable a particular filter. An example of the switch circuit (or switching function) is further described, for example, in FIG. 2B. The selected filter or the group of two or more filters in the adaptable filter unit **106** is switched on between the antenna **104** and the front-end module **108** to perform the frequency selection.

In accordance with an embodiment, the receiver unit **102** further comprises the monitoring unit **110** arranged to monitor the incoming signal to identify an interfering signal component and the control unit **112** is arranged to control the properties of the adjustable filter unit **106** based on the presence of an interfering signal component in the incoming signal. The monitoring unit **110** is configured to detect the interfering signal component of the incoming signal. The control unit **112** is configured to tune the filter coefficients of the adjustable filter unit **106** based on the interfering signal component of the incoming signal. The adjustable filter unit **106** thus attenuates (i.e. filters out) the interfering signal component while keeping the incoming signal intact, which is passed to the front-end module **108.**

FIG. 1B is a network environment diagram of a system with a WLAN device and a user device, in accordance with an embodiment of the present disclosure. FIG. 1B is described in conjuction with elements from FIG.A With referene to FIG.1B, there is shown a network environment of a system **100B** that includes a wireless local area network (WLAN) device **114** and a user device **116.** The WLAN device **114** comprises the receiver unit **102** (of FIG. 1A). There is further shown a wireless network **118.**

The WLAN device **114** includes suitable logic, circuitry, interfaces and/or code that is configured to create a wireless network, such as the wireless network **118.** The WLAN device 114 may be also referred to as an Internet modem, a wireless access point (WAP), a or a Wi-Fi array. In an implementation, the WLAN device **114** is configured to connect a plurality of user devices, such as the user device **116** to the wireless network **118.** The WLAN device **114** comprises the receiver unit **102** which is described in detail in FIG. 1A. Examples of the WLAN device **114** includes but is not limited to a WLAN-based gateway device, a Wi-Fi router, a customized hardware for wireless telecommunication, or any other portable or non-portable electronic device with IEEE 802.11 capabilities (or variations of IEEE 802.11). In an implementation, the WLAN device **114** may be a multi-band access point device (e.g. a three-band radio access point (2.4GHz plus 5GHz) along with a flexible channel (where 5 GHz may not be divided into low/high bands). In another implementation, the WLAN device **114** may be "N" radios access point (e.g. 2.4 GHz plus multiple 5-7 GHz). In yet another implementation, the WLAN device **114** may support a bandwidth of **160** MHz or more deployment without adjacent channel interference.

The user device **116** includes suitable logic, circuitry, interfaces and/or code that is configured to communicate with the WLAN device **114** via the wireless network **118.** Examples of the user device **116** includes, but is not limited to a laptop computer, a smart phone, a wireless headphone, a personal digital assistant (PDA), an Internet-of-Things (IoT) device, a machine type communication (MTC) device, a computing device, an evolved universal mobile telecommunications system (UMTS) terrestrial radio access (E-UTRAN) NR-dual connectivity (EN-DC) device, a server, an loT controller, a drone, a customized hardware for wireless telecommunication, a transmitter, or any other portable or non-portable electronic device with IEEE 802.11 capabilities.

The wireless network **118** includes a medium (e.g. a communication channel) through which one or more user devices, such as the user device **116,** potentially communicates with the WLAN device **114.** Examples of the wireless network **118** include, but are not limited to, a Wireless Local Area Network (WLAN) (e.g. Wi-Fi), a wireless sensor network (WSN), a cloud network, an out-of-band communication network, and/or the Internet. The user device **116** in the network environment is configured to connect to the WLAN device **114,** in accordance with various wireless communication protocols. Examples of such wireless communication protocols, communication standards, and technologies may include, but are not limited to, IEEE **802.11,** IEEE **802.15,** IEEE **802.16,** IEEE **1609,** Worldwide Interoperability for Microwave Access (Wi-MAX), Transmission Control Protocol and Internet Protocol (TCP/IP), User Datagram Protocol (UDP), Hypertext Transfer Protocol (HTTP), File Transfer Protocol (FTP), Voice over Internet Protocol (VoIP), Wi-Fi calling, a protocol for email, instant messaging, and/or Short Message Service (SMS), and/or other loT communication protocols.

The WLAN device 114 for use in the wireless network **118,** comprises the receiver unit **102.** Thus, all the operations executed by the receiver unit **102** are executed by the WLAN device **114.** Alternatively stated, the wireless network **118** that comprises one or more WLAN devices, such as the WLAN device **114** has interference suppression and managenent capability and hence, the performance of the WLAN device **114,** is not affected by neighbouring WLAN devices or other interferers when present in the wireless network **118.** It is to be understood by a person of ordinary skill in the art that, like the user device **116** that communicates with the WLAN device 114 via the wireless network **118,** the system (e.g. the receiver) and method of the present disclosure is also applicable to the wireless communication from WLAN device **114** (e.g. Tx of WLAN device **114** or an access point Tx) to the user device **116** (i.e. receiver of user device **116),** where in-band interference is suppressed adequately for high-performance communication.

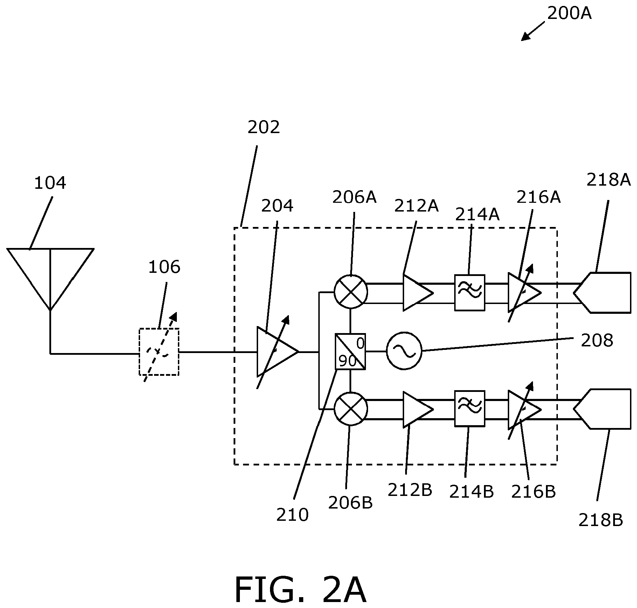

FIG. 2A is a circuit diagram of an exemplary receiver unit that depicts processing of an incoming signal, in accordance with an embodiment of the present disclosure. FIG. 2A is described in conjuction with elements from FIGs. 1A and 1B. With reference to FIG. 2A, there is shown a circuit architecture **200A** of the receiver unit **102.** The receiver unit **102** includes the antenna **104** and the adaptable filter unit **106** (of FIG. 1A). There is further shown a processing circuit **202** in the receiver unit **102.** The processing circuit **202** may be a part of the receiver chain components (or includes various receiver chain components of the receiver unit **102** for signal processing). In this embodiment, the processing circuit **202** includes a low-noise amplifier (LNA) **204,** mixers **206A** and **206B,** an oscillator **208,** a phase shifter **210,** amolifiers **212A** and **212B** low pass filters (LPFs) **214A** and **214B** variable gain amplifiers (VGAs) **216A** and **216B,** and analog-to-digital converters (ADCs) **218A** and **218B.**

In operation, the antenna **104** is configured to receive an incoming signal (e.g. a signal from a WLAN device, such as the user device **116** of FIG. 1B). The incoming signal comprises a first frequency range corresponding to a desired channel and at least a second frequency range comprising an undesired signal. In other words, the first frequency range corresponds to a desired signal component of the incoming signal, whereas the at least second frequency range corresponds to an interfering signal component of the incoming signal.

The adaptable filter unit **106** is configured to receive the incoming signal from the antenna **104** and perform a filteration on the incoming signal. After the interfering signal component of the incoming signal is attenuated (or filter out), the adaptable filter unit **106** is further configured to pass the desired signal component of the incoming signal to the processing circuit **202.** The desired signal component of the incoming signal, is hereinafter, referred to as a filtered signal.

The processing circuit **202** includes suitable logic, circuitry, and/or interfaces that is configured to receive the filtered signal from the adaptable filter unit **106.** The processing circuit **202** is further configured to perform certain operations on the filtered signal such as amplification, frequency translation, analog-to-digital conversion, etc.

The low-noise amplifier (LNA) **204** includes suitable logic, circuitry, and/or interfaces that is arranged at the front end (i.e. as a first part to receive the filtered signal) of the processing circuit **202.** The LNA **204** is used to amplify the filtered signal in order to overcome thermal noise, which may be introduced further by other parts of the processing circuit **202.** In an example, the LNA **204** amplifies the input signal to the mixers **206A** and **206B.**

Each of the mixers **206A** and **206B** includes suitable logic, circuitry, and/or interfaces that is configured to receive the amplified signal from the LNA **204.** The mixers **206A** and **206B** are configured to down-convert frequency (i.e. a radio frequency (RF)) of the received signals into another frequency (i.e. an intermediate frequency (IF)) and split to inphase (i.e. I) and quadrature phase (i.e. Q). The translation from the RF to the IF is generally known as a down-conversion process. The IF is a difference between the RF and a frequency generated by a local oscillator, such as the oscillator **208.**

The oscillator **208** includes suitable logic, circuitry, and/or interfaces that is configured to generate a frequency of oscillation. The generated frequency of oscillation is used in the down-conversion process at mixers **206A** and **206B.**

The phase shifter **210** includes suitable logic, circuitry, and/or interfaces that is configured to create a phase shift in the generated frequency of oscillation. In an example, the created phase shift is in the range of 0° to 90°. The phase shift of 0° corresponds to a I signal and phase shift of 90° corresponds to a Q signal of the generated frequency of oscillation. The I and Q signals of the generated frequency of oscillation are communicated to the mixers **206A** and **206B,** respectively, for the down-conversion process. In a case, of phase and frequency-modulation, the down-conversion process should be performed in quadrature to prevent sidebands of modulated signal from aliasing on one another.

Each of the amplifiers **212A** and **212B** includes suitable logic, circuitry, and/or interfaces that is configured to amplify the received I and Q signals from the mixers **206A** and **206B.** The amplifiers **212A** and **212B** amplify the received I and Q signals from the mixers **206A** and **206B,** respectively. The outputs of the amplifiers **212A** and **212B** are communicatively coupled to the low pass filters **214A** and **214B.**

Each of the low pass filters **214A** and **214B** includes suitable logic, circuitry, and/or interfaces that is configured to filter out higher frequency signals while letting lower frequency signals to pass. The low pass filters **214A** and **214B** perform filteration on the received I and Q signals from the amplifiers **212A** and **212B,** respectively.

Each of the variable gain amplifiers **216A** and **216B** includes suitable logic, circuitry, and/or interfaces that is configured to provide a variable gain to the low frequency signals of the I and Q signals. The gain of amplifiers **216A** and **216B** is dependent on input signal.

Each of the analog-to-digital converters **218A** and **218B** includes suitable logic, circuitry, and/or interfaces that is configured to convert the received analog signals to digital domain before subjected to any digital signal processing. The analog-to-digital converters **218A** and **218B** perform conversion from analog domain to digital domain of the received I and Q signals.

Typically, the performance of the receiver unit **102** depends on the ability to receive a strong or a weak signal in the presence of high-power interferers. The performance metrics of the receiver **102** are sensitivity, selectivity, fidelity, and dynamic range. The architecture of the receiver unit **102** that employs the adaptable filter unit **106** is advantageous as it mitigates the issue of in-band interference before any interfering signal component passes to the low-noise amplifier (LNA) **204.** Thus, beneficially, the disclosed circuit architecture for the receiver unit **102** increases performance in terms of improved sensitivity, selectivity, fidelity and throughput, while reducing cost and power dissipation.

FIG. 2B is a circuit diagram of a receiver unit with an adaptable filter unit, in accordance with another embodiment of the present disclosure. FIG. 2B is described in conjuction with elements from FIGs. 1A, 1B, and 2A. With reference to FIG. 2B, there is shown a circuit architecture **200B** of the receiver unit **102** (FIG. 1) that depicts processing of the incoming signal at the switchable and adaptable filter unit **106** of the receiver unit **102.** In this embodiment, the adaptable filter unit **106** comprises a plurality of filters, such as a bandpass filter (BPF) **106A,** a band stop filter (BSF) **106B,** a low pass filter (LPF) **106C,** and a high pass filter (HPF) **106D.** The processing circuit **202** and its various components are similar to that of processing circuit **202** (FIG. 2A). The receiver unit **102** further includes a first switch **220,** a second switch **222,** a plurality of input pins (i.e. input pins **224A, 224B, 224C, 224D,** and **224E),** and a plurality of output pins (i.e. output pins **226A, 226B, 226C, 226D,** and **226E).**

In operation, the antenna **104** is configured to receive an incoming signal. The incoming signal comprises a first frequency range corresponding to a desired channel and at least a second frequency range comprising an undesired signal. The incoming signal passes towards the first switch **220** of the front-end module **108.**

In this embodiment, the first switch **220** is a transmittter/receiver (T/R) switch. The first switch **220** (i.e. the T/R switch) has three pins **220A, 220B,** and **220C).** The pins **220A, 220B** and **220C** are configured as a transmitter pin, a receiver pin, and an antenna pin, respectively. The antenna pin **220C** carries the incoming signal from the antenna **204** when in operation and connects to the receiver pin **220B** of the first switch **220.** The receiver pin **220B** is further connected to the control unit **112** of the receiver unit **102.** Therefore, the incoming signal is communicated to the control unit **112.**

The control unit **112** is configured to (i.e. arranged to) receive the incoming signal from the receiver pin **220B** of the first switch **220.** Depending on the first/second frequency range of the incoming signal, the control unit **112** controls the adjustable filter of the adaptable filter unit **106** by use of the plurality of input pins (i.e. input pins **224A, 224B, 224C, 224D,** and **224E),** and the plurality of output pins (i.e. output pins **226A, 226B, 226C, 226D,** and **226E).**

Each of the plurality of input pins (i.e. the input pins **224A, 224B, 224C, 224D,** and **224E)** is arranged to connect the adjustable filter of the adaptable filter unit **106** at input side of the control unit **112.** Similarly, each of the plurality of output pins (i.e. the output pins **226A, 226B, 226C, 226D,** and **226E)** is arranged to connect the adjustable filter of the adaptable filter unit **106** at output side of the control unit **112.**

The adaptable filter unit **106** includes the bandpass filter **106A,** the band stop filter **106B,** the low pass filter **106C,** and the high pass filter **106D.** The incoming signal from the control unit **112** is filtered by the adaptable filter unit **106** to filter out the undesired frequency range. In a first case, the first frequency range of the incoming signal may pass through the bandpass filter **106A,** and simultaneously, the second frequency range of the incoming signal may be attenuated. In this case, the bandpass filter **106A** is connected between the input pin **224B** and the output pin **226B.** The properties of the bandpass filter **106A** is tuned by the control unit **112** to do the filteration of the incoming signal. In a second case, the first frequency range of the incoming signal may pass through the band stop filter **106B.** In this case, the band stop filter **106B** is connected between the input pin **224C** and the output pin **226C.** Thus, in the second case, the band stop filter **106B** filters the incoming signal. Similarly, each filter of the adaptable filter unit **106** is used individually and dynamically (i.e. dynamic filtering) based on the first/second frequency range of the incoming signal.

In a third case, the incoming signal may not require any filteration, means that the incoming signal does not have any interference signal. In this case, the incoming signal is passed further by use of a direct path provided between the input pin **224A** and the output pin **226A.**

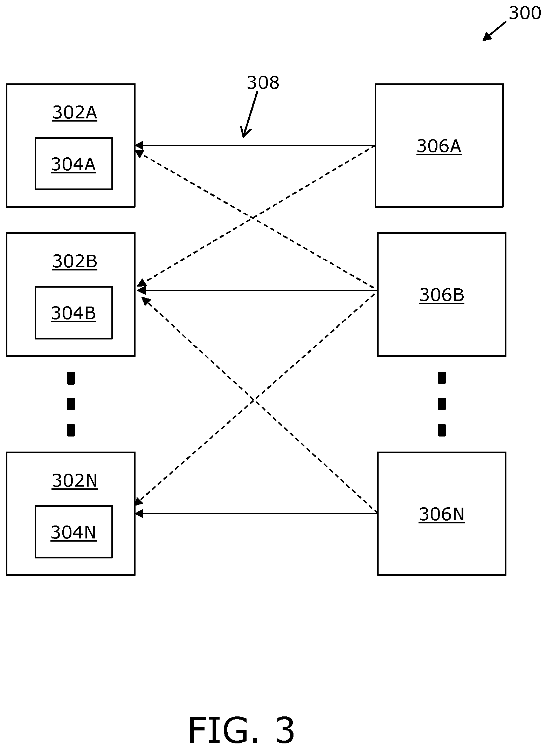

FIG. 3 is an illustration of an exemplary implementation of a wireless network with WLAN devices, receiver units, and user devices, in a very high deployment scenario, in accordance with an embodiment of the present disclosure. FIG. 3 is described in conjuction with elements from FIGs. 1A, 1B, 2A, and 2B. With reference to Fig. 3, there is shown a network environment of a system **300** that includes a plurality of WLAN devices (namely and specifically, a first access point device **302A,** a second access point device **302B,** and upto a Nth access point device **302N).** Each of the plurality of WLAN devices include a receiver unit. For example, the first access point device **302A** includes a first receiver unit **304A** and the second access point device **302B** includes a second receiver unit **304B.** Similarly, the Nth access point device **302N** includes a Nth receiver unit **304N.** Each of the plurality of receiver units is similar to that of the receiver unit **102** (of FIG. 1A). There is further shown a plurality of user devices (namely, a first user device **306A,** a second user device **306B,** and upto a Nth user device **306N)** in a wireless network 308. Each of the plurality of user devices is similar to that of the user device **116** (of FIG. 1B).

In accordance with the exemplary scenario, the first user device **306A** is configured to communicate with the first access point device **302A.** At the same time, the second user device **306B** is configured to communicate with the second access point device **302B.** The second access point device **302B** lies within a communication range of the first access point device **302A.** In other words, the distance between neighbouring (or adjacent or nearby deployed) access point devices, may represent a high deployment or a very high deployment scenario. Moreover, the cellular signals (e.g. 2G. 3G, 4G, 5G, and the like) and other Wi-Fi networks may co-exist. In contradiction to conventional receivers or conventional WLAN devices, an incoming signal to any WLAN device, even if it comprises, interference signal, is adequately suppressed at corresponding WLAN device (in the FIG. 3). The interference signal has no impact on the performance of the plurality of WLAN devices. The reason is that each of the plurality of WLAN devices comprises an improved receiver unit (i.e. the first receiver unit **304A,** the second receiver unit **304B,** and the Nth receiver unit **304N** which are similar to that of the receiver unit **102** of FIG. 1A). Each receiver unit has a capability of rejecting the interference signal because of the inclusion of the adaptable filter unit **106** (of FIG. 1A). In this way, the plurality of user devices can communicate with each of the plurality of access point devices without any performance degradation of the plurality of WLAN devices. In other words, an interference-free communication or at least significantly reduced interference is achived even in highly densed wireless network scenarios (e.g. in high deployment or very high deployment scenarios). The exemplary implementation in FIG. 3, is described by taking an example of access point devices. However, the present disclosure is applicable to any WLAN device for suppression of in-band interference.

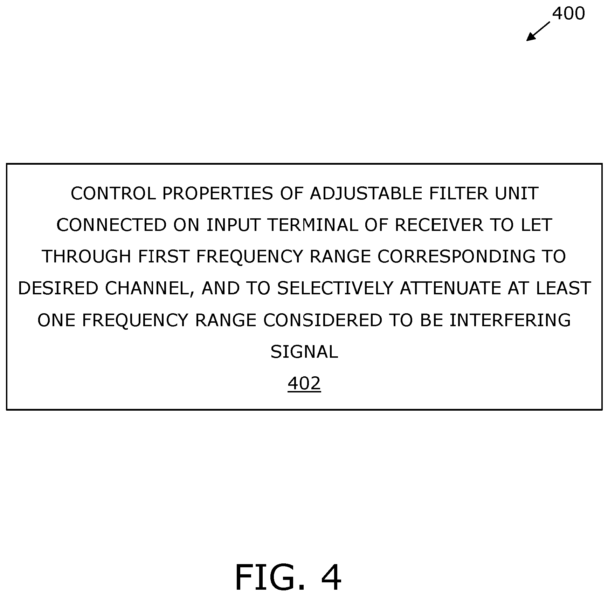

FIG. 4 is a flowchart of a method **400** of suppressing in-band interference in a receiver in an incoming signal in a wireless network, in accordance with an embodiment of the present disclosure. The method **400** is executed by the receiver **102.** The method **400** includes a step **402.**

At step **402,** properties of the adjustable filter unit **106** connected on the input terminal of the receiver unit **102** is controlled to let through a first frequency range corresponding to a desired channel, and to selectively attenuate at least one frequency range considered to be an interfering signal. An example of controlling the properties of the adjustable filter unit **106** by use of the control unit **112** has been described in detail, for example, in FIGs. 1A, 2A, and 2B.

In accordance with an embodiment, the method **400** further comprises monitoring the incoming signal and controlling the properties of the adjustable filter unit **106** based on the presence of the interfering signal in the incoming signal. An example of monitoring of the incoming signal and controlling the properties of the adjustable filter unit **106** has been described in detail, for example, in FIGs. 1A, 2A, and 2B.

In accordance with an embodiment, the adjustable filter unit **106** comprises at least one tunable filter and the step of controlling the properties of the adjustable filter unit **106** includes tuning the filter (in the method **400).** An example of controlling the properties of the adjustable filter unit **106** by tuning the filter has been described in detail, for example, in FIGs. 1A, 2A, and 2B.

In accordance with an embodiment, the adjustable filter unit **106** comprises a plurality of filters and the step of controlling the properties of the adjustable filter unit **106** includes selectively connecting and disconnecting filters of the plurality of filters on the input (in the method **400).** Such controlling the properties of the adjustable filter unit **106** with the plurality of filters has been described in detail, for example, in FIG. 2B.

In accordance with an embodiment, the method **400** further comprising the step of compensating an insertion loss caused by the filter unit **106.** The insertion loss is compensated by providing an additional gain in the antenna **104** of the receiver **102.**

The step **402** is only illustrative and other alternatives can also be provided where one or more steps are added, one or more steps are removed, or one or more steps are provided in a different sequence without departing from the scope of the claims herein.

In one aspect, a computer program product is provided comprising a non-transitory computer-readable storage medium having computer program code stored thereon, the computer program code being executable by a procesor to execute the method **400.** Examples of implementation of the non-transitory computer-readable storage medium may include, but are not limited to, Electrically Erasable Programmable Read-Only Memory (EEPROM), Random Access Memory (RAM), Read Only Memory (ROM), Hard Disk Drive (HDD), Flash memory, a Secure Digital (SD) card, Solid-State Drive (SSD), a computer readable storage medium, and/or CPU cache memory. A computer readable storage medium for providing a non-transient memory may include, but is not limited to, an electronic storage device, a magnetic storage device, an optical storage device, an electromagnetic storage device, a semiconductor storage device, or any suitable combination of the foregoing. Examples of the procesor is same as of the control unit **112.**

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural. The word "exemplary" is used herein to mean "serving as an example, instance or illustration". Any embodiment described as "exemplary" is not necessarily to be construed as preferred or advantageous over other embodiments and/or to exclude the incorporation of features from other embodiments. The word "optionally" is used herein to mean "is provided in some embodiments and not provided in other embodiments". It is appreciated that certain features of the present disclosure, which are, for clarity, described in the context of separate embodiments, may also be provided in combination in a single embodiment. Conversely, various features of the invention, which are, for brevity, described in the context of a single embodiment, may also be provided separately or in any suitable combination or as suitable in any other described embodiment of the disclosure.

## Claims

1. A receiver unit (102) for use in a wireless network (118), comprising a front-end module (108) arranged to receive an incoming signal from an antenna (104) and comprising a first and a second switch (220, 222), the first switch being a transmitter/receiver, T/R, switch,
the incoming signal comprising a first frequency range corresponding to a desired channel and at least a second frequency range comprising an undesired signal,
a control unit (112) arranged between the antenna (104) and the front-end module (108), comprising an adaptable filter unit (106) connected at its input to a receive pin of the T/R switch (210) of the frontend-module (180) and
connected at its output to the second switch (222) of the front-end module (180), and the adaptable filter unit comprising a plurality of filters (106A, 106B, 106C, 106D) of different types ( 106A, 106B, 106C, 106D) arranged to selectively attenuate the at least second frequency range, while letting the first frequency range through to the front-end module (108),
a processing circuit (202) including a low-noise amplifier (204) receiving an output from the second switch (222) of the front-end module (108),
the control unit (112) arranged to control the adaptable filter unit (106) to control the frequencies included in the first and/or the second frequency range,
further comprising a monitoring unit (110) arranged to monitor the incoming signal to identify an interfering signal component,
wherein the control unit (112) is arranged to control the properties of the adjustable filter unit (106) based on the presence of an interfering signal component in the incoming signal by selectively connecting and disconnecting filters of the plurality of filters (106A, 106B, 106C, 106D).

2. A receiver unit (102) according to claim 1, wherein the at least one filter is an adjustable filter, and the control unit (112) is arranged to control the adaptable filter unit (106) by adjusting the adjustable filter.

3. A receiver unit (102) according to claim 1, wherein the at least one filter comprises at least one bandpass filter (106A), highpass filter (106D), lowpass filter (106C) or band-stop filter (106B), arranged to let the first frequency range through to the front-end module (108).

4. A receiver unit (102) according to any one of the preceding claims, wherein the at least one filter comprises at least one bandpass filter (106A), highpass filter (106D), lowpass filter (106C) or band-stop filter (106B), arranged to filter out the second frequency range.

5. A receiver unit (102) according to any one of the preceding claims, wherein the adaptable filter unit (106) comprises a plurality of filters.

6. A receiver unit (102) according to claim 5, wherein the control unit (112) is arranged to adapt the frequency range by selectively connecting one or more of the filters between the antenna (104) and the front-end module (108).

7. A receiver unit (102) according to any one of the preceding claims, for use in a wireless fidelity, Wi-Fi, network.

8. A wireless local area network device (114) for use in a wireless network (118), said wireless local area network device (114) comprising a receiver unit (102) according to any one of the preceding claims.

9. A method of suppressing interference in a receiver unit (102) according to one or more of claims 1-8 in an incoming signal in a wireless network (118), comprising the step of controlling the properties of the adaptable filter unit (106) connected on an input terminal of the receiver unit (102) to let through a first frequency range corresponding to a desired channel, and to selectively attenuate at least one frequency range considered to be an interfering signal, wherein the adaptable filter unit (106) comprises a plurality of filters (106A, 106B, 106C) of different types ((106A, 106B, 106C, 106D) and the step of controlling the properties of the adaptable filter unit (106) includes selectively connecting and disconnecting filters of the plurality of filters (106A, 106B, 106C, 106D) on the input.

10. A method according to claim 9, comprising monitoring the incoming signal and controlling the properties of the adaptable filter unit (106) based on the presence of an interfering signal in the incoming signal.

11. A method according to claim 9, wherein the adaptable filter unit (106) comprises at least one tunable filter and the step of controlling the properties of the adaptable filter unit (106) includes tuning the filter.

12. A method according to any one of the claims 9 - 11, further comprising the step of compensating an insertion loss caused by the adaptable filter unit (106).

13. A computer program product comprising computer readable instructions which, when performed in a receiver unit (102) for a wireless network (118), will cause the receiver unit (102) to perform the method according to any one of the claims 9 - 12.

## Patentansprüche

1. Empfangseinheit (102) zur Verwendung in einem drahtlosen Netzwerk (118), umfassend ein Frontend-Modul (108), das so angeordnet ist, dass es ein eingehendes Signal aus einer Antenne (104) empfängt, und umfassend einen ersten und einen zweiten Schalter (220, 222), wobei der erste Schalter ein Sende- /Empfangsschalter, T/R-Schalter, ist,
wobei das eingehende Signal einen ersten Frequenzbereich entsprechend einem gewünschten Kanal umfasst und zumindest ein zweiter Frequenzbereich ein unerwünschtes Signal umfasst,
wobei eine Steuereinheit (112), die zwischen der Antenne (104) und dem Frontend-Modul (108) angeordnet ist, eine anpassbare Filtereinheit (106) umfasst, die an ihrem Eingang mit einem Empfangspin des T/R-Schalters (210) des Frontend-Moduls (180) verbunden ist und an ihrem Ausgang mit dem zweiten Schalter (222) des Frontend-Moduls (180) verbunden ist, und
wobei die anpassbare Filtereinheit eine Vielzahl von Filtern (106A, 106B, 106C, 106D) unterschiedlicher Typen (106A, 106B, 106C, 106D) umfasst, die so angeordnet ist, dass sie den mindestens zweiten Frequenzbereich selektiv dämpft, während sie den ersten Frequenzbereich zu dem Frontend-Modul (108) durchlässt,
wobei eine Verarbeitungsschaltung (202) einen rauscharmen Verstärker (204) beinhaltet, der einen Ausgang aus dem zweiten Schalter (222) des Frontend-Moduls (108) empfängt,
die Steuereinheit (112) so angeordnet ist, dass sie die anpassbare Filtereinheit (106) steuert, um die in dem ersten und/oder dem zweiten Frequenzbereich eingeschlossenen Frequenzen zu steuern,
ferner umfassend eine Überwachungseinheit (110), die so angeordnet ist, dass sie das eingehende Signal überwacht, um eine störende Signalkomponente zu identifizieren,
wobei die Steuereinheit (112) so angeordnet ist, dass sie die Eigenschaften der anpassbaren Filtereinheit (106) basierend auf dem Vorhandensein einer störenden Signalkomponente in dem eingehenden Signal steuert, indem sie Filter der Vielzahl von Filtern (106A, 106B, 106C, 106D) selektiv verbindet und trennt.

2. Empfangseinheit (102) nach Anspruch 1, wobei der mindestens eine Filter ein einstellbarer Filter ist und die Steuereinheit (112) so angeordnet ist, dass sie die anpassbare Filtereinheit (106) durch Einstellen des einstellbaren Filters steuert.

3. Empfangseinheit (102) nach Anspruch 1, wobei der mindestens eine Filter mindestens einen Bandpassfilter (106A), Hochpassfilter (106D), Tiefpassfilter (106C) oder Bandsperrfilter (106B) umfasst, der so angeordnet ist, dass er den ersten Frequenzbereich zu dem Frontend-Modul (108) durchlässt.

4. Empfangseinheit (102) nach einem der vorhergehenden Ansprüche, wobei der mindestens eine Filter mindestens einen Bandpassfilter (106A), Hochpassfilter (106D), Tiefpassfilter (106C) oder Bandsperrfilter (106B) umfasst, der so angeordnet ist, dass er den zweiten Frequenzbereich herausfiltert.

5. Empfangseinheit (102) nach einem der vorhergehenden Ansprüche, wobei die anpassbare Filtereinheit (106) eine Vielzahl von Filtern umfasst.

6. Empfangseinheit (102) nach Anspruch 5, wobei die Steuereinheit (112) so angeordnet ist, dass sie den Frequenzbereich durch selektives Verbinden eines oder mehrerer Filter zwischen der Antenne (104) und dem Frontend-Modul (108) anpasst.

7. Empfangseinheit (102) nach einem der vorhergehenden Ansprüche zur Verwendung in einem Wireless-Fidelity-Netzwerk, Wi-Fi-Netzwerk.

8. Drahtlose lokale Netzwerkvorrichtung (114) zur Verwendung in einem drahtlosen Netzwerk (118), wobei die drahtlose lokale Netzwerkvorrichtung (114) eine Empfangseinheit (102) nach einem der vorhergehenden Ansprüche umfasst.

9. Verfahren zur Störunterdrückung in einer Empfangseinheit (102) nach einem oder mehreren der Ansprüche 1-8 in einem eingehenden Signal in einem drahtlosen Netzwerk (118), umfassend den Schritt zum Steuern der Eigenschaften der anpassbaren Filtereinheit (106), die an einen Eingangsanschluss der Empfangseinheit (102) verbunden ist, um einen ersten Frequenzbereich entsprechend einem gewünschten Kanal durchzulassen und um zumindest einen Frequenzbereich, der als Störsignal betrachtet wird, selektiv zu dämpfen, wobei die anpassbare Filtereinheit (106) eine Vielzahl von Filtern (106A, 106B, 106C) unterschiedlichen Typs (106A, 106B, 106C, 106D) umfasst und der Schritt zum Steuern der Eigenschaften der anpassbaren Filtereinheit (106) das selektive Verbinden und Trennen von Filtern der Vielzahl von Filtern (106A, 106B, 106C, 106D) an dem Eingang umfasst.

10. Verfahren nach Anspruch 9, umfassend Überwachen des eingehenden Signals und Steuern der Eigenschaften der anpassbaren Filtereinheit (106) basierend auf dem Vorhandensein eines Störsignals in dem eingehenden Signal.

11. Verfahren nach Anspruch 9, wobei die anpassbare Filtereinheit (106) zumindest einen abstimmbaren Filter umfasst und der Schritt zum Steuern der Eigenschaften der anpassbaren Filtereinheit (106) das Abstimmen des Filters beinhaltet.

12. Verfahren nach einem der Ansprüche 9-11, ferner umfassend den Schritt zum Kompensieren eines durch die anpassbare Filtereinheit (106) verursachten Einfügungsverlusts.

13. Computerprogrammprodukt, umfassend computerlesbare Anweisungen, welche bei Durchführung in einer Empfangseinheit (102) für ein drahtloses Netzwerk (118) bewirken, dass die Empfangseinheit (102) das Verfahren nach einem der Ansprüche 9-12 durchführt.

## Revendications

1. Unité réceptrice (102) destinée à être utilisée dans un réseau sans fil (118), comprenant un module frontal (108) agencé pour recevoir un signal entrant en provenance d'une antenne (104) et comprenant un premier et un second commutateur (220, 222), le premier commutateur étant un commutateur émetteur/récepteur, T/R, le signal entrant comprenant une première plage de fréquences correspondant à un canal souhaité et au moins une seconde plage de fréquences comprenant un signal indésirable,
une unité de commande (112) agencée entre l'antenne (104) et le module frontal (108), comprenant une unité de filtre adaptable (106) connectée en entrée à une broche de réception du commutateur T/R (210) du module frontal (180) et connectée en sortie au second commutateur (222) du module frontal (180), et l'unité de filtre adaptable comprenant une pluralité de filtres (106A, 106B, 106C, 106D) de différents types (106A, 106B, 106C, 106D) agencés pour atténuer sélectivement l'au moins une seconde plage de fréquences, tout en laissant passer la première plage de fréquences jusqu'au module frontal (108), un circuit de traitement (202) comportant un amplificateur à faible bruit (204) recevant une sortie en provenance du second commutateur (222) du module frontal (108), l'unité de commande (112) étant agencée pour commander l'unité de filtre adaptable (106) pour commander les fréquences incluses dans la première et/ou la seconde plage de fréquences, comprenant également une unité de surveillance (110) agencée pour surveiller le signal entrant pour identifier une composante de signal interférente, dans laquelle l'unité de commande (112) est agencée pour commander les propriétés de l'unité de filtre réglable (106) sur la base de la présence d'une composante de signal interférente dans le signal entrant en connectant et en déconnectant sélectivement des filtres de la pluralité de filtres (106A, 106B, 106C, 106D).

2. Unité réceptrice (102) selon la revendication 1, dans laquelle l'au moins un filtre est un filtre réglable, et l'unité de commande (112) est agencée pour commander l'unité de filtre adaptable (106) en réglant le filtre réglable.

3. Unité réceptrice (102) selon la revendication 1, dans laquelle l'au moins un filtre comprend au moins un filtre passe-bande (106A), un filtre passe-haut (106D), un filtre passe-bas (106C) ou un filtre coupe-bande (106B), agencé pour laisser passer la première plage de fréquences jusqu'au module frontal (108).

4. Unité réceptrice (102) selon l'une quelconque des revendications précédentes, dans laquelle l'au moins un filtre comprend au moins un filtre passe-bande (106A), un filtre passe-haut (106D), un filtre passe-bas (106C) ou un filtre coupe-bande (106B), agencé pour filtrer la seconde plage de fréquences.

5. Unité réceptrice (102) selon l'une quelconque des revendications précédentes, dans laquelle l'unité de filtre adaptable (106) comprend une pluralité de filtres.

6. Unité réceptrice (102) selon la revendication 5, dans laquelle l'unité de commande (112) est agencée pour adapter la plage de fréquences en connectant sélectivement l'un ou plusieurs des filtres entre l'antenne (104) et le module frontal (108).

7. Unité réceptrice (102) selon l'une quelconque des revendications précédentes, destinée à être utilisée dans un réseau de fidélité sans fil, Wi-Fi.

8. Dispositif de réseau local sans fil (114) destiné à être utilisé dans un réseau sans fil (118), ledit dispositif de réseau local sans fil (114) comprenant une unité réceptrice (102) selon l'une quelconque des revendications précédentes.

9. Procédé de suppression d'interférence dans une unité réceptrice (102) selon l'une ou plusieurs des revendications 1 à 8 dans un signal entrant dans un réseau sans fil (118), comprenant l'étape de commande des propriétés de l'unité de filtre adaptable (106) connectée à un terminal d'entrée de l'unité réceptrice (102) pour laisser passer une première plage de fréquences correspondant à un canal souhaité, et pour atténuer sélectivement au moins une plage de fréquences considérée comme étant un signal interférent, dans lequel l'unité de filtre adaptable (106) comprend une pluralité de filtres (106A, 106B, 106C) de différents types (106A, 106B, 106C, 106D) et l'étape de commande des propriétés de l'unité de filtre adaptable (106) comporte la connexion et la déconnexion sélectives de filtres de la pluralité de filtres (106A, 106B, 106C, 106D) sur l'entrée.

10. Procédé selon la revendication 9, comprenant la surveillance du signal entrant et la commande des propriétés de l'unité de filtre adaptable (106) sur la base de la présence d'un signal interférent dans le signal entrant.

11. Procédé selon la revendication 9, dans lequel l'unité de filtre adaptable (106) comprend au moins un filtre accordable et l'étape de commande des propriétés de l'unité de filtre adaptable (106) comporte le fait d'accorder le filtre.

12. Procédé selon l'une quelconque des revendications 9 à 11, comprenant également l'étape de compensation d'une perte d'insertion provoquée par l'unité de filtre adaptable (106).

13. Produit de programme informatique comprenant des instructions lisibles par ordinateur qui, lorsqu'elles sont exécutées dans une unité réceptrice (102) destinée à un réseau sans fil (118), amèneront l'unité réceptrice (102) à exécuter le procédé selon l'une quelconque des revendications 9 à 12.
